# EUROPEAN PATENT SPECIFICATION

(11) **EP 1 358 772 B1**
(45) Date of publication and mention of the grant of the patent: **30.06.2010**
(21) Application number: 02712866.9
(22) Date of filing: 28.01.2002
(51) Int. Cl.: H04W 88/06

(54) **METHOD AND APPARATUS FOR PRE-CONFIGURING A WIRELESS COMMUNICATION DEVICE FOR FUTURE OPERATION IN A DISTANT WIRELESS COMMUNICATION SYSTEM**
VERFAHREN UND VORRICHTUNG ZUR VORKONFIGURATION EINES DRAHTLOSEN KOMMUNIKATIONSGERÄTES FÜR DEN ZUKÜNFTIGE BETRIEB IN EINEM ENTFERNTEN DRAHTLOSEN KOMMUNIKATIONSSYSTEM
PROCEDE ET DISPOSITIF DE PRECONFIGURATION D'UN DISPOSITIF DE COMMUNICATION SANS FIL EN VUE D'UNE UTILISATION ULTERIEURE DANS UN SYSTEME DE COMMUNICATION SANS FIL ELOIGNE

(30) Priority: 26.01.2001 GB 0102025
(43) Date of publication of application: 05.11.2003
(73) Proprietor: MOTOROLA, INC., Schaumburg, IL 60196 (US)
(72) Inventor: THOMAS, Howard, John, Circencester GL7 1EJ (GB)
(74) Representative: Cross, Rupert Edward Blount
(86) International application number: PCT/EP2002/000889
(87) International publication number: WO 2002/060204

(56) References cited:
- GB-A- 2 325 820
- GB-A- 2 350 749
- US-A- 6 023 620
- LE T H ET AL: "PERFORMANCE OF AN ACCESSING AND ALLOCATION SCHEME FOR THE DOWNLOAD CHANNEL IN SOFTWARE RADIO" WCNC. IEEE WIRELESS COMMUNICATIONS AND NETWORKING CONFERENCE, XX, XX, 23 September 2000 (2000-09-23), pages 517-521, XP001051280
- NOBLET C ET AL: "ASSESSING THE OVER-THE-AIR SOFTWARE DOWNLOAD FOR RECONFIRABLE TERMINAL" IEE COLLOQUIUM ON PERSONAL COMMUNICATIONS IN THE 21TH CENTURY, IEE, LONDON, GB, 1998, pages 6-1-6-6, XP000668888

## Description

### FIELD OF THE INVENTION

The present invention relates generally to wireless communication systems and, in particular, to a method and apparatus for pre-configuring a wireless communication device, such as a cellular telephone, for future operation in a wireless communication system serving a destination of a user of the wireless communication device.

### BACKGROUND OF THE INVENTION

Wireless communication systems are well known. Such systems include, but are not limited to, cellular communication systems operating in accordance with various promulgated radio access technologies (RATs), such as Advanced Mobile Phone Service (AMPS), Narrowband Advanced Mobile Phone Service (NAMPS), United States Digital Cellular (USDC), Global Systems for Mobile Communications (GSM), and Code Division Multiple Access (CDMA), personal communication systems (PCS) operating in accordance with various radio access technologies, such as CDMA, and multi-service systems, such as the "MOTOROLA" "iDEN" system, that provide many other services in addition to person-to-person calling, such as packet data, paging, short message service, and wireless Internet access. Many PCS operators are also entering the wireless Internet access arena.

Although there are many types of wireless systems, users typically subscribe to a system that utilizes only one radio access technology (RAT) through a local operator or operator licensee. For example, a user may subscribe with Nextel Communications, Inc. to operate under a subscription plan on a "MOTOROLA" "iDEN" system or a user may subscribe with Sprint Communications, Inc. to operate on a CDMA PCS system. Subscription generally allows the user to operate only on the user's home or local system for rates established at the time of subscription. Since operators know that many subscribers travel throughout the United States and internationally, many operators establish roaming arrangements with other operators of similar RAT systems to enable their users to operate on other similar systems.

In addition to establishing roaming arrangements or agreements with operators of similar RAT systems, some operators establish roaming arrangements with operators of different systems to enable their subscribers to operate on a different RAT system at the subscriber's destination (e.g., when a similar RAT system is not available), provided that the subscriber's device is compatible with the destination system. For example, the "MOTOROLA" "i2000" multi-communication device is compatible with both the "MOTOROLA" "iDEN" system and the GSM system, and therefore can be operated on "iDEN" systems in the United States and GSM systems in Europe and other parts of the world. Such arrangements enable users of one RAT system to operate on another RAT system in the event that a RAT system similar to the user's home system is not available at the user's destination. To be compatible with multiple RAT systems, the wireless communication device typically stores configuration data for its various compatible systems.

When a user of a wireless device that is capable of operating on more than one RAT system leaves the service coverage area of the user's home system and arrives in the service coverage area of a system serving the user's destination (e.g., when a user of a "MOTOROLA" "i2000" multi-communication device operating on the Chicago metropolitan area "NEXTEL" system flies from Chicago to Paris), the wireless device, upon power-up, typically first searches for its home system and, if it cannot find its home system, searches for a similar RAT system operated by an operator that has a roaming arrangement with the user's home system operator. If the wireless device cannot find a RAT system similar to the device's home system and the device is compatible with other RAT systems, the device proceeds to search for a RAT system with which the device is compatible and for which a roaming arrangement exists between the device's home system operator and the operator of the destination system. Once an appropriate system has been found, the wireless device configures itself appropriately using the pre-stored configuration data for the particular destination system's radio access technology and any network parameters the device may have received from the destination system over a control channel. After configuring itself, the wireless device registers with the new system. Once registration has been completed, the device is ready for use. Needless to say, several seconds and even minutes may be required in order for the wireless device, upon being powered up at the user's destination, to perform the aforementioned searching, configuring, and registering operations. Such a delay is typically very noticeable to the user (e. g. , a roaming light on the device's display panel may be flashing to indicate the device is searching for a system) and, if the delay lasts on the order of minutes, can be very frustrating to the user who cannot place a call until device registration has been completed.

In addition to an undesirable delay, there is no guarantee that the wireless device will select the system that is most preferable to the user. For example, if a wireless device subscribing to a home GSM system is compatible with three RAT systems that are available at the user's destination (e. g. , GSM, PCS, and"iDEN"), the wireless device might automatically select the GSM system when the user would more preferably desire to use the"iDEN"system. Although the user can take steps to subsequently manually change the system on which the device will operate, such steps take additional time and effort on the part of the user at a time when the user may wish to place calls in the destination system.

Therefore, a need exists for a method and apparatus for configuring a wireless communication device operating in one wireless communication system (e. g. , a home system) for future operation in another wireless communication system serving a destination of the wireless device and/or its user prior to the device entering the destination system so that, upon power-up of the device at the destination, the device need only register with the preferred pre-selected system (an operation that typically takes less than five seconds to complete) to be ready for use. Such a method and apparatus that also allow the wireless device user to subscribe, permanently or temporarily, to a compatible destination system for which there is no roaming arrangement between the user's home system operator and the destination system operator would be a further improvement over the prior art.

GB 2350 749 describes a method of transferring configuration data to a software defined radio apparatus.

GB 2325 820 describes a system where if a mobile station enters into a service area of a non-subscribed to communication system and uses it with a roaming service, the mobile station receives system information including user interface information from a repeater station of the non-subscribed to communication system.

US 6 023 620 describes a method for downloading control software to a cellular telephone.

### BRIEF DESCRIPTION OF THE DRAWINGS

FIG. 1 is a block diagram illustrating interconnection of a wireless device configuration network to a home system of a wireless communication device and one or more destination systems in accordance with the present invention.
FIG. 2 is a block diagram of the wireless device configuration network of FIG. 1 in accordance with a preferred embodiment of the present invention.
FIG. 3 is a block diagram of the wireless communication device of FIG. 1 in accordance with a preferred embodiment of the present invention.
FIG. 4 is a block diagram of an exemplary arrival/departure gate terminal in an airport illustrating various possible locations for an access node of the tireless device configuration network of FIG. 2.
FIG. 5 is a logic flow diagram of steps executed by a wireless device configuration network to configure a wireless communication device for future operation in accordance with one embodiment of the present invention.
FIG. 6 is a logic flow diagram of steps executed by a wireless device configuration network to configure a wireless communication device for future operation in accordance with an alternative embodiment of the present invention:
FIG. 7 is a logic flow diagram of steps executed by a wireless communication device to configure the wireless communication device for future operation in accordance with the present invention.

### DETAILED DESCRIPTION OF A PREFERRED EMBODIMENT

Generally, the present invention encompasses a method and apparatus for configuring a wireless communication device operating in a first wireless communication system for future operation in a second wireless communication system serving a destination of the wireless device and/or its user. A wireless device configuration network positioned near a location from which the wireless device user will depart for the destination establishes a communication with the wireless device. During the communication, the wireless device configuration network determines a destination of the wireless device preferably by accessing its own database or a records database of a common carrier transportation company providing travel service to the wireless device user. The wireless device configuration network also determines whether the wireless device is capable of operating in a wireless system serving the destination. If the wireless device is capable of operating in a destination system, the configuration network transmits configuration information for the destination system to the wireless device. If the wireless device is capable of operating in multiple destination systems, the configuration network may automatically select the destination system based on pre-stored criteria or may engage in communication with the wireless device to allow the device user to select the destination system. Upon receiving the configuration information, the wireless device configures itself for use in the destination system prior to arriving at the destination.

By pre-configuring a wireless communication device in this manner, the present invention provides a mechanism for wireless devices, such as cellular telephones, to be ready for use immediately upon the device user's arrival at a destination. For example, in contrast to prior art techniques in which the wireless device includes configuration data for several wireless communication systems and must search for a system for which it has pre-stored configuration data upon the user's arrival at his or her destination, the method and apparatus of the present invention provide for selection of the system and configuration of the wireless device preferably at the time the user departs for his or her destination (or at least prior to the user's arrival at his or her destination), thereby enabling the wireless device to be ready for use almost immediately upon arrival instead of being unusable for a significant period of time while the wireless device searches for system and configures itself. In addition, the present invention provides a mechanism for the device user to negotiate subscription or roaming costs for the destination system ahead of time (in the event that the user's home system operator does not have a roaming arrangement with any destination system operator), instead of having to do so upon arrival and adding additional delays prior to initial use of the destination system. Further, the present invention eliminates or at least substantially reduces the need for the wireless device to store configuration data for destination systems, thereby reducing wireless device memory requirements.

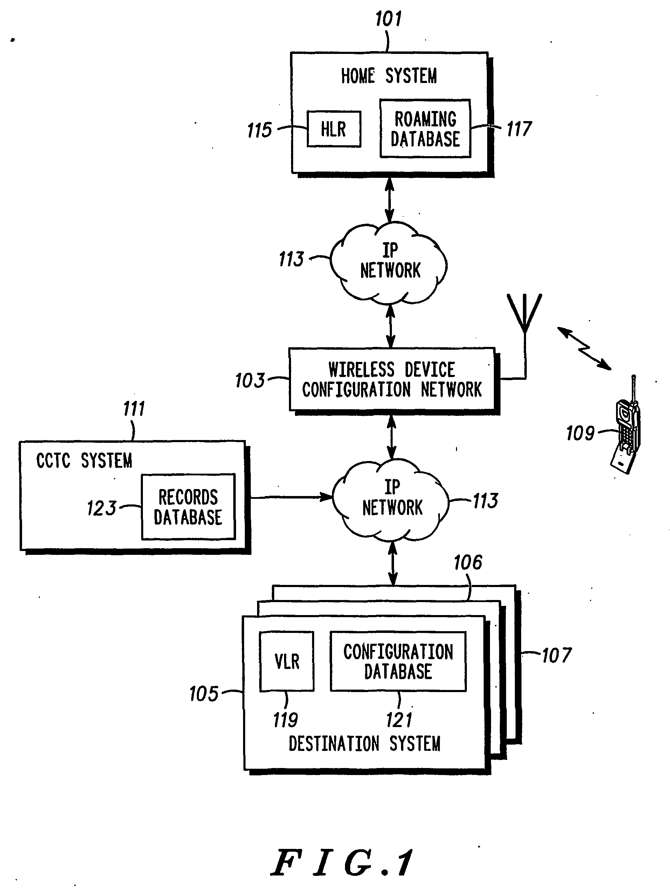

The present invention can be more fully understood with reference to FIGs. 1-7, in which like reference numerals designate like, items. FIG. 1 is a block diagram illustrating interconnection of a wireless device configuration network 103 to a home system 101 of a wireless communication device 109 and one or more destination systems 105-107 in accordance with the present invention. As depicted, the wireless configuration network 103 is operably coupled via a wide area network, such as an Internet Protocol (IP) network 113, to the wireless device's home system 101, one or more destination systems 105-107 (three shown) and one or more common carrier transportation company (CCTC) systems 111 (one shown). As described in detail below, the wireless communication device 109 communicates (preferably over a wireless communication link) with the configuration network 103 to obtain configuration information for a system 105-107 in which the wireless device 109 expects to be operating in the near future. For example, the configuration network 103 preferably provides configuration information to the wireless device 109 for a system serving a destination of the wireless device 109 and its user.

The wireless device's home system 101 and the destination systems 105-107 may be any type of wireless communication system. In a preferred embodiment, the systems 101, 105-107 at least provide two-way, person-to-person calling, although the systems 201, 105-107 may provide other features as well. Thus, the systems 101, 105-107 may be analog or digital cellular systems, PCS systems, "iDEN" systems, or various other systems. Each system 101, 105-107, therefore, provides wireless communication service to a respective service coverage area (not shown). Common geometries for service coverage areas include a circular geometry (e.g., for omni-directional coverage) and a hexagonal geometry (e.g., for multi-sectored coverage).

The home system 101 includes, *inter alia,* a home location register (HLR) 115 and a roaming database 117. The HLR 115 is a known database that preferably contains all information, including serial or identification (ID) numbers, pertaining to wireless devices that are provisioned on (i.e., have a subscription to) the home system 101. In a home GSM system, the unique ID number associated with a particular wireless device is the international mobile subscriber identity (IMSI) number. The IMSI is typically stored on a subscriber identity module (SIM) card that is inserted into the wireless device. The HLR 115 typically includes a mapping of the IMSI numbers to associated mobile subscriber international switched digital network (MSISDN) numbers. Each MSISDN number is a temporary number for the wireless device that is used to route calls from other systems to the wireless device in the GSM system. The HLR 115 also preferably includes a mapping of MSISDN numbers to the conventional telephone numbers of the provisioned wireless devices. The HLR 115 further preferably includes unique encryption keys that are used to authenticate wireless devices for use in the home system 101. Still further, the HLR 115 may also include information regarding barred IMSIs or MSISDNs, short dialing codes, and subscribed services as is known in the art.

The roaming database 117 is a database containing information relating to the roaming arrangements that the operator of the home system 101 may have with operators of various other systems 105-107. For example, the roaming database 117 preferably includes identifications of particular systems 105-107 for which roaming arrangements exist between the operator of the home system 101 and the operators of those particular systems 105-107. Although depicted separately in FIG. 1, the roaming database 117 may be implemented as part of the HLR 115.

As used herein, the term "home system" 101 or "home wireless system" refers to the system on which the user's wireless device 109 is provisioned for billing purposes. The wireless device 109 may or may not be actually operating on the device's home system 101 at the time the user and the device 109 depart for their destination. Rather, the user may be operating the device 109 on a first destination system 105 and be departing for an area served by a second destination system 106. For example, the wireless device 109 may be provisioned on an "iDEN" system in Chicago, Illinois U.S.A. operated by Nextel Communications, Inc., be currently operating on an "iDEN" system in Toronto, Ontario Canada operated by Clearnet Communications Inc., and be departing for London, England, which is served by GSM systems operated by Orange PCS Ltd., BT Cellnet and other GSM service providers.

Each destination system 105-107 includes a visitor location register (VLR) 119 and a configuration database 121. The VLR 119 is similar to the HLR 115 except that the VLR 119 includes serial or ID numbers of wireless devices that are currently registered on the particular destination wireless system 105-107, but which are not provisioned in the particular destination system 105-107. During registration in a visited system 105-107, the VLR 119 requests information about the visiting wireless device from the wireless device's home system HER 115. The requested information is a subset of the complete information stored in the HLR 115 and is defined by international standards and agreements between system operators to facilitate roaming between systems. In addition to requesting information, the VLR 119 communicates with the wireless device's home HLR 115 to authenticate the wireless device as a user of the home system 101. During authentication, the VLR 119 receives a series of code triplets from the HLR 115 to allow the VLR 119 to perform subsequent authentications locally. The code triplets are derived from the encryption keys stored in the HLR 115. Authentication is typically performed at registration, at call initiation, and periodically during a call.

The configuration database 121 includes configuration information for configuring a wireless device to operate on or in the particular destination system 105-107. For example, the configuration information includes information such as the radio access technology (RAT) used in the destination system 105-107, the features supported by the destination system 105-107, and billing information. The RAT information stored in the configuration database 121 includes identification of the inbound and outbound control and traffic frequencies, multiple access scheme, information to support handover or handoff and cell or base site selection (e.g., lists of neighboring sites or cells to monitor), and low level information associated with accessing the destination system 105-107 (e.g., frequency hopping sequence for use in CDMA systems, scrambling code used in each cell or coverage area of the system, paging channels to monitor, and so forth). The multiple access scheme used in the destination system 105-107 may be any one or more of time division multiple access (TDMA), CDMA (direct sequence or frequency hopping), frequency division multiple access (FDMA), orthogonal frequency division multiplexing (OFDM), opportunity division multiple access (ODMA), a multiple access technology in which portions of the radio spectrum to be used are determined by local measurements and in which multiple portions of the radio spectrum may be used simultaneously, or any other multiple access or multiplexing methodology.

Each destination system 105-107 also preferably includes an HLR (not shown) and a roaming database (not shown) because each destination system 105-107 is also a home system for other wireless devices. Similarly, the home system 101 also preferably includes a VLR and a configuration database because the home system 101 may also be a destination system for other wireless devices.

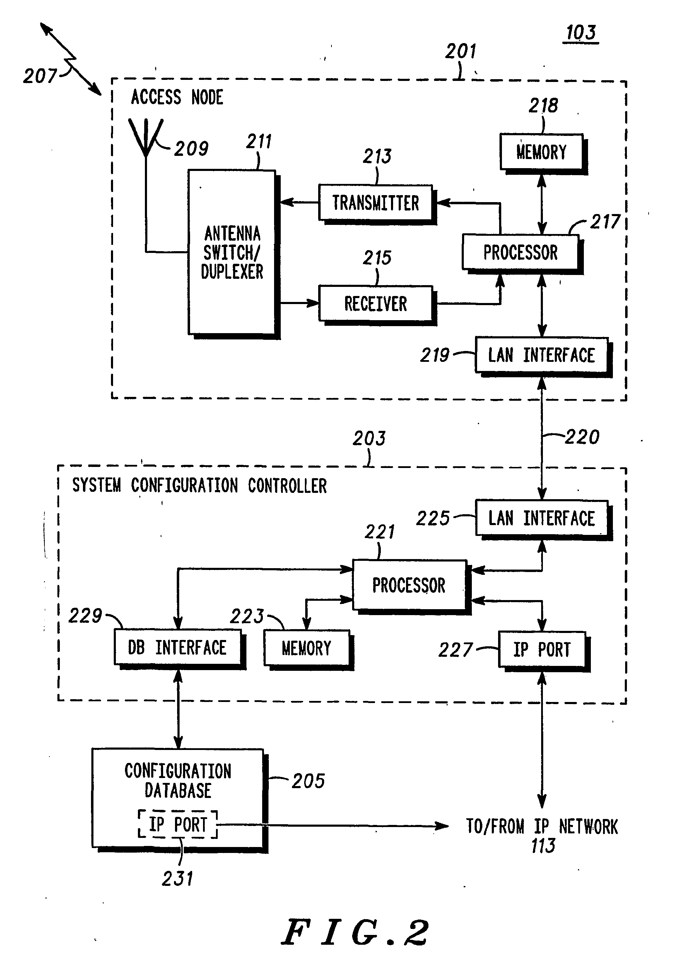

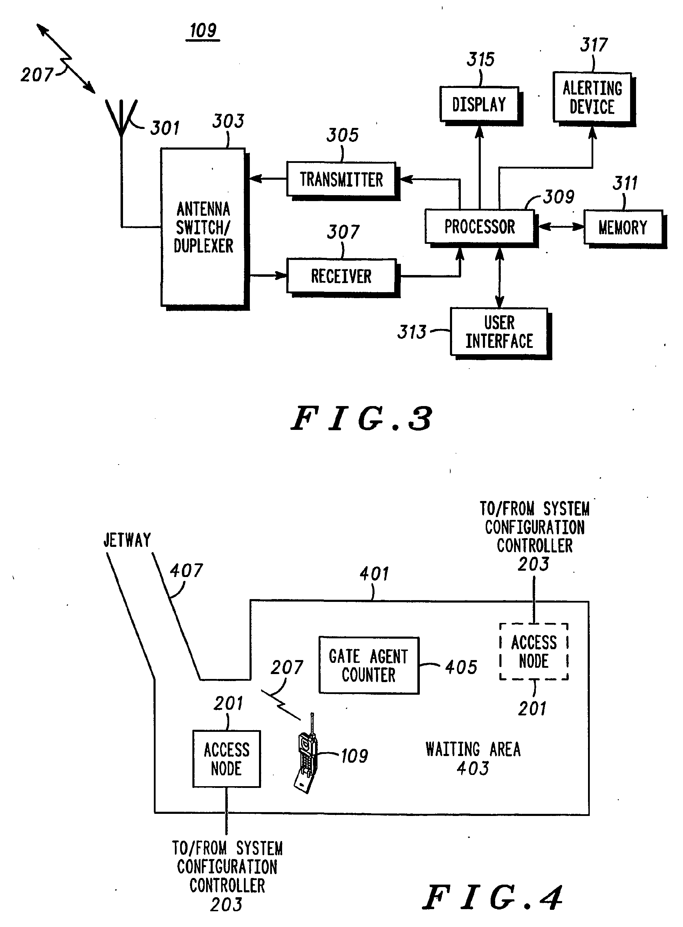

The CCTC system 111 preferably comprises a computer system for an airline or other common carrier transportation company and includes a records database 123. The records database 123 includes personal itinerary information for company customers (i.e., passengers) and destination information (e.g., flight itineraries) for the company's transportation devices (e.g., airplanes, trains, or buses). The CCTC system 111 is accessed by the configuration network 103 to determine a destination of the wireless device 109 and/or the device's user. Preferred embodiments of the wireless device configuration network 103 and the wireless communication device 109 are described in detail below with respect to FIGs. 2 and 3.

FIG. 2 is a block diagram of the wireless device configuration network 103 of FIG. 1 in accordance with a preferred embodiment of the present invention. The configuration network 103 includes an access node 201, a system configuration controller 203, a configuration database 205, and a communication link (depicted preferably as a wireless communication link 207). The access node 201 preferably includes, *inter alia,* an antenna 209, an antenna switch/duplexer 211, a transmitter 213, a receiver 215, a processor 217, memory 218 for storing operating instructions executable by the processor 217, and a local area network (LAN) interface 219. The system configuration controller 203 preferably includes, *inter alia,* a processor 221, memory 223 for storing operating instructions executable by the processor 221 and other information as described in more detail below, a LAN interface 225, an IP network port 227, and a configuration database (DB) interface 229. The configuration database 205 may also include an IP network port interface 231, particularly when the configuration database 205 is directly accessible (e.g., may be written to) by the wireless systems 101, 105-107 over the IP network 113.

With respect to the access node 201, the antenna 209 may include a single antenna element or multiple antenna elements (e.g., an array). The antenna switch/duplexer 211 may be a known PIN diode or other switch to implement an antenna switch for half-duplex operation or a known arrangement of filters to implement a duplexer for full duplex operation. The transmitter 213 and the receiver 215 include appropriate conventional circuitry to facilitate digital or analog transmissions over the communication link 207. The communication link 207 is preferably a wireless link operating in accordance with the Bluetooth standard, but may alternatively be another wireless link (including, but not limited to, an infrared link, a radio frequency link, or a microwave link), a wireline link (including, but not limited to, an asymmetric or symmetric digital subscriber line (DSL), an integrated digital services network (ISDN), a frame relay link, an asynchronous transfer mode (ATM) link, a low speed telephone line, or a hybrid fiber coaxial network), or an optical link. For example, the transmitter 213 and the receiver 215 may be implemented as an appropriate wireline or wireless modem. In the event that the communication link 207 is a wireline or optical link, the access node 201 may also include a receptacle (not shown) in which the wireless device 109 may be placed such that a wireline or optical data port of the wireless device may appropriately couple to the communication link 207.

The access node's processor 217 may be a microprocessor, a microcontroller, a digital signal processor (DSP), a state machine, logic circuitry, or any other device or group of devices that processes information based on operational or programming instructions. One of ordinary skill in the art will recognize that when the processor 217 has one or more of its functions performed by a state machine or logic circuitry, the memory containing the corresponding operational instructions may be embedded within the state machine or logic circuitry. The memory 218 may include various digital storage media, such as random access memory (RAM), read only memory (ROM), a floppy disk, a compact disk read only memory (CD-ROM), a hard disk drive, a digital versatile disk (DVD), flash memory or any other medium for storing digital information. As mentioned above, the memory 218 preferably stores operating instructions that, when executed, cause the processor 217 to perform its particular functions. The LAN interface 219 is known and preferably comprises a 100baseT Ethernet interface to couple the access node processor 217 to the LAN 220 connecting the access node 201 to the system configuration controller 203. The operations performed by the processor 217 and the rest of the elements of the access node 201 are described in detail below.

With respect to the system configuration controller 203, the processor 221 may be a microprocessor, a microcontroller, a digital signal processor (DSP), a state machine, logic circuitry, or any other device or group of device that processes information based on operational or programming instructions. One of ordinary skill in the art will recognize that when the processor 217 has one or more of its functions performed by a state machine or logic circuitry, the memory containing the corresponding operational instructions may be embedded within the state machine or logic circuitry. The memory 223 may include various digital storage media, such as RAM, ROM, a floppy disk, a CD-ROM, a hard disk drive, a DVD, flash memory or any other medium for storing digital information. As mentioned above, the memory 223 preferably stores operating instructions that, when executed, cause the processor 221 to perform its particular functions. The LAN interface 225 is similar to LAN interface 219. The database interface 229 is preferably an application programming interface (API) to enable the processor 221 to properly communicate with the configuration database 205. The IP port 227 is preferably a standard telephone, DSL, cable, or other modem for communicating over an IP network 113, such as the Internet. The operations performed by the processor 221 and the rest of the elements of the system configuration controller 203 are described in detail below.

The configuration database 205 preferably stores configuration information for various wireless systems 101, 105-107 on which the wireless device 109 may desire to operate based on the destination of the wireless device 109. The configuration database 205 may include an IP port 231 to allow wireless systems 101, 105-107 to download their configuration data (either original or updated) directly to the database 205. In a preferred embodiment, the access node 201 is positioned near the location where the user of the wireless device 109 will board the common carrier transportation device; whereas, the system configuration controller 203 and the configuration database 205 are collocated in a central facility (e.g., the operations center of an airport or airport terminal).

FIG. 3 is a block diagram of the wireless communication device 109 of FIG. 1 in accordance with a preferred embodiment of the present invention. The wireless device 109 includes, *inter alia,* an antenna 301, an antenna switch/duplexer 303, a transmitter 305, a receiver 307, a processor 309, memory 311 for storing operating instructions executable by the processor 309 and for storing other information (e.g., configuration information, profile information, and radio access technology information) as described in more detail below, a user interface 313, a display 315, and an alerting device 317.

The wireless device 109 may be any two-way communication.device capable of communicating in a wireless communication system 101, 105-107. Thus, the wireless device 109 may be a two-way radio, a radiotelephone, a two-way pager, a wireless data terminal, a laptop computer, a palmtop computer, a personal digital assistant (PDA), or any other two-way device having wireless capabilities.

The antenna 301 may include a single antenna element or multiple antenna elements (e.g., an array). The antenna switch/duplexer 303 may be a known PIN diode or other switch to implement an antenna switch for half-duplex operation or a known arrangement of filters to implement a duplexer for full duplex operation.

The transmitter 305 and the receiver 307 include appropriate circuitry to enable digital or analog transmissions over communication link 207. For example, the transmitter 305 and receiver 307 may be implemented as an appropriate wireline or wireless modem, or as conventional transmitting and receiving components in a two-way wireless device. The transmitter 305 and the receiver 307 are preferably implemented so as to facilitate transmission and reception in a short-range (e.g., five-to-ten meter) Bluetooth network. In the event that the transmitter 305 and the receiver 307 are implemented as a wireless modem, the wireless modem may be located on a Personal Computer Memory Card International Association (PCMCIA) card that may be inserted into a computing device, such as a laptop or palmtop computer or PDA, to facilitate wireless communications. Wireline and wireless modems are well known; thus no further discussion of them will be presented except to facilitate an understanding of the present invention.

The processor 309 may be a microprocessor, a microcontroller, a digital signal processor (DSP), a state machine, logic circuitry, or any other device or group of devices that processes information based on operational or programming instructions. One of ordinary skill in the art will recognize that when the processor 309 has one or more of its functions performed by a state machine or logic circuitry, the memory containing the corresponding operational instructions may be embedded within the state machine or logic circuitry. The memory 311 may include one of more of various digital storage media, such as RAM, ROM, flash memory or any other medium for storing digital information. As mentioned above, the memory 311 preferably stores operating instructions that, when executed, cause the processor 309 to perform its particular functions. The operations performed by the processor 309 and the rest of the elements of the wireless communication device 109 are described in detail below.

The user interface 313 may be any conventional user interface, such as a keyboard, a keypad, a mouse or rollerball, a thumbwheel, a voice recognition circuit, a touchscreen, a touchpad, or any other interface for allowing the user of the wireless device 109 to make a selection or instruct the device 109 to take some action. The display 315 may be any conventional cathode ray tube (CRT) display, liquid crystal display (LCD), or other display. In addition, when audio display is desired, the display 315 preferably also includes an audio display device, such as one or more speakers. The alerting device 317 is preferably any conventional alerting mechanism, such as a tone generator that produces an audible alert, such as a ring or a set of beeps, or an electrically actuatable vibration device.

FIG. 4 is a block diagram of an exemplary arrival/departure gate terminal 401 in an airport illustrating various possible locations for the access node 201 of the wireless device configuration network 103 of FIG. 2. As illustrated, the arrival/departure gate terminal 401 includes a waiting area 403, a gate agent counter 405, a jet way ramp 407, and one or more access nodes 201. The access node 201 is preferably positioned near the jet way ramp 407 or at some other appropriate spot (e.g., in the waiting area 403 as shown) near the location at which the user of the wireless device 109 will board the aircraft. Such positioning of the access node 201 facilitates re-configuration of the wireless device 109 as necessary just prior to departure.

Configuration of a wireless communication device 109 operating in one system (e.g., home system 101) for future use in another system 105-107 in accordance with a preferred embodiment of the present invention can be more fully understood with reference to FIGs. 1-4. The access node processor 217 instructs the access node transmitter 213 to transmit a RAT information request over an outbound wireless link, such as a Bluetooth link. When a wireless device 109 comes within range of the access node transmissions and detects the RAT information request signal, the wireless device 109 either automatically transmits its RAT information together with other information, such as device identification (ID), a user ID (e.g., name), and requested services, to the access node 201 or presents a message to the device user on the device display 315 to inform the device user that re-configuration has been requested. Such a message would allow the device user to override re-configuration if re-configuration was not desired (e.g., the device user was not departing, but rather was only in the gate terminal 401 awaiting arrival of an airplane). To display such a message, the message may be included in the broadcast signal emanating from the access node 201 and forwarded to the device display 315 after appropriate processing by the device receiver 307 and processor 309. Alternatively, the device processor 309 may generate the message through execution of software in response to receiving the RAT information request signal from the access node 201. The device user may be alerted to the device's receipt of the request signal and display of the message through activation of the alerting device 317 in accordance with known techniques.

To automatically transmit the RAT and other information to the access node 201, the wireless device receiver 307 receives the RAT information request signal via the device's antenna 301 and antenna switch/duplexer 303, and communicates the request signal to the device processor 309. The device processor 309 retrieves the RAT and other information from device memory 311, processes it for transmission in accordance with the transmission protocol (e.g., Bluetooth) expected by the access node 201, and provides the processed RAT and other information to the device transmitter 305 for transmission to the access node 201 via the device's antenna switch/duplexer 303 and antenna 301. Communication of the RAT information may be performed in accordance with an uplink channel access methodology indicated in the RAT information request signal, or through any one of a variety of known contention schemes, such as ALOHA. As noted above, the RAT information identifies, *inter alia,* the radio access technology capabilities of the wireless device 109.

The access node receiver 215 receives the RAT and other information via the node's antenna 209 and antenna switch/duplexer 211, and communicates the received information to the node's processor 217. The node's processor 217 forwards the received information over a LAN (e.g., an Ethernet link) to the processor 221 of the system configuration controller 203. The node's processor 217 may temporarily stop broadcasting RAT information requests while the wireless device configuration process is ongoing (e.g., where the wireless device configuration network 103 has only been allocated a single wireless channel or link for performing re-configuration of wireless devices 109), or may continue broadcasting RAT information requests over an outbound control link and assign one of multiple trunked traffic links 107 for use during re-configuration of the wireless device 109 (e.g., where the wireless device configuration network 103 has been allocated more than one wireless channel or link for performing re-configuration of wireless devices 109).

The system configuration controller 203 (SCC) is preferably positioned near the location from which the device user will depart the service coverage area of the wireless system (e.g., home system 101) in which the wireless device is currently operating or registered. In a preferred embodiment, the system configuration controller 203 is located at the airport or other common carrier transportation facility. Alternatively, the system configuration controller 203 may be collocated with, or even form part of, the base site controller, mobile switching center or other wireless system controller that is controlling some or all of the communications over the wireless system 101 in which the wireless device 109 is presently registered.

The SCC processor 221, either responsive to receiving the wireless device's RAT information or prior to receiving the RAT information (e.g., once a day), accesses the records database 123 of the CCTC system 111 over a wide area network, such as an IP network 113, to determine the final destination of the device user or a destination of the aircraft that will be departing from the gate terminal 401 and on which the device user will be traveling (which may or may not be the device user's final destination, but is at least one destination of the device user). The SCC processor 221 operates in accordance with operating instructions stored in the SCC memory 223.

After determining the wireless device's destination from the CCTC system 111, the SCC processor 221 retrieves RAT information for the system or systems serving the wireless device's destination from the configuration network's configuration database 205 or in real time directly from the wireless system or systems 105-107. The configuration database 205, when used, preferably stores configuration information, including RAT information, for each wireless system 105-107 for which the wireless device 109 may be pre-configured. The configuration database 204 is preferably updated regularly (e.g., periodically or responsive to receiving random updates or requests to retrieve updates from the wireless systems 105-107) either by the SCC processor 221 or directly by the wireless systems 105-107 (e.g., via IP port 231).

Once the SCC processor 221 has acquired the RAT information of both the wireless device 109 and the destination systems 105-107, and has determined the destination of wireless device 109, the SCC processor 221 determines whether any of the destination systems 105-107 employ a radio access technology that is compatible with a radio access technology of the wireless communication device 109. If no destination systems 105-107 are compatible with the wireless device 109, the SCC processor 221 sends a message indicating such incompatibility to the wireless device 109 for display to the device user via the LAN 220, the access node 201 and the communication link 207 (which although depicted as a wireless link may alternatively be a wired or optical linkfor example, where the access node 201 includes a receptacle (not shown) in which the wireless device 109 is placed for reconfiguration purposes). If one or more destination systems 105-107 employ radio access technologies that are compatible with the radio access technologies of the wireless device 109, the SCC processor 221 initiates an algorithm for selecting the destination system 105-107 for which to provide configuration information to the wireless device 109. Selection of the destination system 105-107 may be performed automatically by the SCC processor 221 or may be performed manually by the user of the wireless device 109.

When automatic system selection is utilized (e.g., as requested by the wireless device user either separately responsive to a query by the SCC processor 221 after receipt of the wireless device's RAT information or as part of the wireless device's RAT information transmission, or as directly pre-programmed into the instruction set for the SCC processor 221), the SCC processor 221 selects the destination system (e.g., system 105) based on pre-established criteria, such as radio access technology, existence or non-existence of a roaming or similar arrangement between the operator of the wireless device's home system 101 and the operator of the proposed destination system 105-107, system usage costs, and/or available services. To determine whether a roaming or similar arrangement exists between the operator of the wireless device's home system 101 and the operator of the proposed destination system 105-107, the SCC processor 221 preferably accesses the roaming database 117 or an equivalent database of the wireless device's home system 101 in real time (i.e., responsive to receipt of the wireless device's RAT and other information, which information would include the identity of the wireless device's home system 101), or accesses the SCC memory 223 or the configuration database 205 (e.g., the status of roaming arrangements between wireless system operators may be stored in the SCC memory 223 or in the configuration database 205 together with configuration data when the SCC processor 221 or the configuration database 205 obtains original or updated configuration data).

When manual selection of the destination system 105-107 is utilized, the SCC processor 221 communicates a message to the access node processor 217 via the LAN 220 and LAN interfaces 219, 225 requesting selection of a destination system (or confirmation of selection of a destination system 105 in the case where only one destination system 105 utilizes a radio access technology compatible with the wireless device 109) and identifying candidate destination systems 105-107. The message may also include other information relating to each candidate destination system 105-107, such as radio access technology utilized, usage costs, roaming costs, a form for requesting a temporary or permanent subscription to the system (e.g., where no roaming arrangement exists), advertisements, types of available services, and/or any other information as may be deemed necessary by the system operators or the SCC processor 221. The access node controller 217 processes the message data received from the SCC controller 221 for transmission and forwards the processed message data to the transmitter 213 for transmission to the wireless device 109 over the communication link 207, which, as discussed above, is preferably a wireless link.

Upon receiving the system selection request and corresponding system selection information (i.e., the list of candidate destination systems 105-107 and other related system information) from the SCC processor 221 via the access node 201, the wireless device processor 309 activates the alerting device 317 to inform the wireless device user that the system selection information has arrived and displays the system selection information on the display 315. Depending on the size of the display 315, only a portion of the system selection information may be displayed at any particular time. The device user uses the user interface 313 to scroll, page or otherwise proceed through the system selection information and make a selection of the desired destination system. The order in which the candidate destination systems 105-107 are displayed to the user may be determined in a variety of ways. For example, the candidate systems 105-107 may be displayed based on service offerings (e.g., with those systems offering services similar to the wireless device's current services being listed first), usage costs (e.g., with the lowest cost systems being listed first), system popularity (e.g., as determined by the system configuration controller 203 based on input from other subscribers who have roamed onto the systems 105-107), coverage area, or other system parameters.

Upon receiving the user's selection of a desired destination system via the user interface 313, the wireless device processor 309 generates a message indicating the user's selection and provides the message to the transmitter 305. The transmitter 305 transmits the message over the communication link 207 to the access node 201. The access node receiver 215 receives the message and provides it to the access node processor 217. The access node processor 217 processes the message as necessary for communication over the LAN 220 and communicates the message over the LAN 220 to the SCC processor 221. The SCC processor 221 identifies the selected destination system from the message, retrieves the configuration information for the selected system from either the configuration network's database 205 or the selected system itself via the IP network 113, and communicates the configuration information back to the access node processor 217 via the LAN 220.

The user's selection of a destination system also preferably triggers a transfer of information from the HLR 115 of the user's home system 101 to the VLR 119 of the destination system. The information is transferred via the IP network 113 either from information stored in the configuration database 205 or directly from the HLR 115 of the home system 101. This transfer of information allows the wireless device 109 to pre-register on the selected destination system and be immediately available to respond to paging messages upon the wireless device's entry into the coverage area of the destination system. Information related to the encryption used to authenticate wireless devices is also preferably transferred to the VLR 119 of the selected destination system to facilitate fast authentication of the wireless device 109 on the destination system.

The access node processor 217 processes the configuration information for transmission in accordance with the configuration network's transmission protocol and forwards the processed configuration information to the access node transmitter 213. The access node transmitter 213 transmits the configuration information to the wireless device 109 over the communication link 207.

Responsive to receiving the configuration information, the wireless device processor 309 proceeds with configuring the wireless device 109 for operation in or on the selected destination wireless system. Configuring the wireless device 109 includes, without limitation, operations such as setting up the display menu to correspond to the selected destination system, enabling and disabling radio access technologies as appropriate, downloading software for the radio access technology or technologies of the destination system, downloading software necessary for billing in the destination system, downloading maps for use in navigation, downloading specific access information (e.g., scrambling code, paging channel to monitor, control channel frequency, transmit power level, timing offset, and so forth) for the cell site or base site with which the wireless device 109 will initially access the destination system, and setting the device 109 up to receive updated travel information from the common carrier transportation company (e.g., related to changes in itinerary, such as flight schedules).

In a preferred embodiment, each gate terminal 401 of each worldwide airport includes at least one access node 201 for configuring wireless communication devices 109. Since each airport gate terminal 401 preferably includes such an access node 201, the access node 201 at the arrival gate terminal 401 may be used to (i) update configuration information in arriving wireless devices 109 (e.g., in the event such configuration information changed since the wireless device's departure), (ii) provide system operator advertisements to wireless device users through transmissions to the wireless devices 109, (iii) provide timing or synchronization information to the arriving wireless devices 109 (e.g., when the destination system requires an accurate time reference), and/or (iv) provide original configuration information to arriving wireless devices 109 in the event that the system 105-107 for which the arriving device is pre-configured is not operational for some reason or in the event that the arriving device 109 was not pre-configured prior to arrival. The arrival gate access node 201 may also be used to indicate how or where the device user can obtain (e.g., lease or buy) a new wireless device compatible with the destination system in the event that the user's present device is unable to access the new system. In this case, the arrival gate access node 201 may provide the user the option to transfer information to the new wireless device to facilitate seamless service provision, albeit with a different wireless device.

As described above, the present invention provides a configuration network and wireless device that facilitate configuration of the wireless device for future operation in a wireless destination system prior to the device's arrival in a coverage area of the destination system. Thus, in contrast to the prior art, the present invention provides a means for configuring the wireless device such that the wireless device is ready for operation virtually immediately (less the time required to register in the destination system) upon the device user's arrival at his or her destination. Whereas a prior art wireless device must search for candidate systems, select an appropriate one of the candidate systems, and then configure itself for operation in the selected system upon arriving at the device's destination, the present invention provides for such searching, selecting and configuring prior to arrival at the destination (and preferably just prior to departure for the destination), thereby minimizing the amount of time the user must wait prior to being able to use his or her wireless device at the destination.

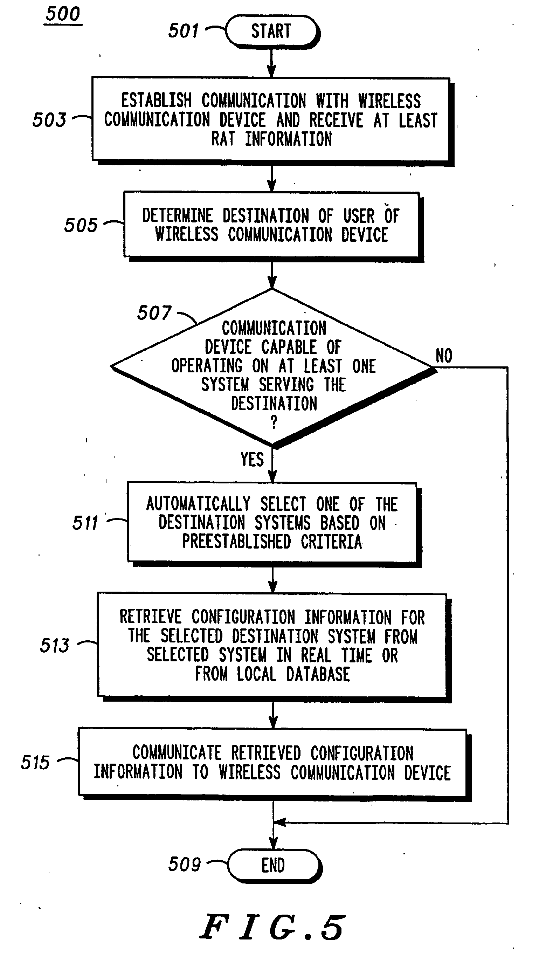

FIG. 5 is a logic flow diagram 500 of steps executed by a wireless device configuration network to configure a wireless communication device for future operation in accordance with one embodiment of the present invention. The configuration network may be an independent wired or wireless network positioned near a location from which the user of the wireless communication device will depart from the device's home system or another system currently servicing the wireless device. Alternatively, the configuration network may form part of the wireless system that is providing communication service to the wireless device prior to the device user's departure.

The logic flow begins (501) when the configuration network establishes (503) a communication with the wireless communication device and receives at least RAT information from the wireless device. In a preferred embodiment, the configuration network continuously transmits RAT information request signals or other access request signals over an outbound broadcast channel to attract responses from any wireless devices that may be in the range of the configuration network's signal. As discussed above, the configuration network preferably comprises a short-range Bluetooth network; consequently, the range of the broadcast signal is only about five-to-ten meters. Alternatively, the configuration network may be a wired network that does not transmit any broadcast signal, but instead includes an access node in which the wireless device user places the wireless device to facilitate configuration of the device through a wireline or optical connection instead of a wireless radio connection.

When a wireless communication device enters the coverage area of the configuration network (e.g., when a user walks near (e.g., within five-to-ten meters of) the wireless configuration network's access node) or is placed in an access node receptacle (for a wireline or optical configuration), the wireless device responds to the broadcast or an equivalent request from the configuration network by transmitting its RAT intimation (e.g., the identities of which RAT systems (e.g., GSM, PCS, USDC, and so forth) are compatible with the wireless device) and any other information (e.g., device profile, user ID, device ID and subscription information, such as requested services, option to pay premium rates for higher quality of service, and/or encryption information to facilitate secure operation and authentication) to the configuration network over an appropriate communication channel (wireless or wired depending on the arrangement of the configuration network's access node). The RAT and other information allow the configuration network to determine whether or not the wireless device is compatible with any wireless systems servicing the device user's destination.

In addition to establishing a communication with the wireless device and receiving RAT and other information from the wireless device, the configuration network determines (505) a destination of the user of the wireless device and, therefore, a destination of the wireless device itself. In a preferred embodiment, the configuration network communicates with a computer system of one or more common carrier transportation companies (e.g., where connecting flights on different airlines may be necessary) that are responsible for transporting the device user to his or her final destination to obtain access to the travel itinerary or records of the device user and/or the common carrier transportation device (e.g., airplane) that will be used to transport the device user to either an intermediate or final destination. For example, arrival/departure gates at airports are typically assigned to one airline carrier or a set of airline carriers. Thus, the configuration network can communicate with the computer system of the single airline or each airline of the set to obtain destination information related to the airplane departing from the particular gate or a final destination for the device user (e.g., where the device user is connecting on a different flight). Where multiple airlines share a gate, the departure schedule for the gate may be downloaded to or retrieved by the configuration network each day so that the configuration network can quickly determine which airline to contact to determine the airplane destination and/or the device user (passenger) final destination. Alternatively, the destinations for each departure may be downloaded to or retrieved by the configuration network each day and stored in a local database. In this case, the configuration network may determine a device user's destination by simply accessing its local database for the destination of the common carrier transportation device that will depart from the gate at which the access node that received the device's RAT information is located.

After the configuration network has established a communication with the wireless device that is to be pre-configured and has determined a destination of the device, the configuration network determines (507) whether the wireless communication device is capable of operating on at least one wireless system serving the device's final destination. Such a determination is preferably made by comparing the RAT information received from the wireless device to the RAT information for the wireless system or systems servicing the device's destination to determine the compatibility of the wireless device with the destination wireless system or systems. In the preferred embodiment, the configuration network queries its local configuration database to make the comparison. As discussed above, the local configuration database includes configuration information (including RAT information and available system services) for each wireless system for which the wireless device may be pre-configured. The configuration network retrieves or receives each system's configuration information periodically or otherwise as necessary (e.g., responsive to receipt of an update notification from a wireless system) over an IP network, such as the Internet, or some other backbone network, and stores the configuration information in a local configuration database. The size of the database may be reduced by recognizing that many systems use similar radio access technologies and other features. Thus, common information may be stored in one part of the database with pointers to such data being used in place of such data in respective configuration records for individual systems. The configuration information in the configuration network's local database is updated as necessary to insure that the stored configuration information remains current.

Alternatively, the configuration network may access the destination system or systems in real time to determine the RAT information for each system on as needed basis for comparison to the received RAT information. Such an alternative method for determining the wireless device's compatibility with the destination system or systems reduces the memory requirements of the configuration network at the cost of possible delays in determining compatibility due to delays in the IP or other network coupling the configuration network to the destination system(s).

In the event that the configuration network determines (507) that the wireless device is not compatible with any destination system, no configuration information is sent to the device, and the logic flow ends (509). A message may be sent to the wireless device for display to the user in this case to inform the user that use of the wireless device at the user's destination will not be possible.

On the other hand, in the event that the configuration network determines (507) that the wireless device is compatible with at least one destination system, the configuration network automatically selects (511) one of the destination systems for pre-configuring the wireless device based on pre-established criteria. The pre-established criteria preferably includes whether or not the operators of the destination systems have roaming or other arrangements/agreements with the operator of the user's home wireless system. For example, the configuration network might only select the system or systems for which such roaming arrangements exist. To determine whether or not a roaming arrangement exists, the configuration network either contacts the wireless device's home system in real time or consults its local database in the event that the database includes previously obtained information regarding such roaming arrangements.

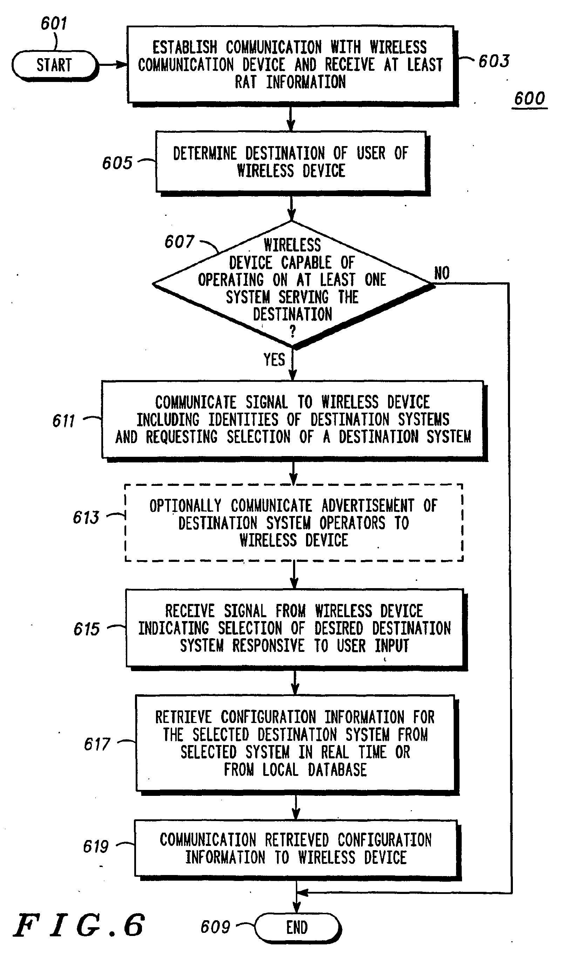

The pre-established criteria might also include various other information, such as maximum per minute or per call costs, minimum coverage area, minimum or preferred available services, minimum or preferred geographic availability of services (e.g., high data rate services may be available in only a portion of a destination system's overall coverage area or within a cell of the destination system), and/or the capability to access telephone numbers (e.g., directory assistance or travel center numbers) frequently used by the wireless device (e.g., those numbers stored in the device's speed dial registers). In the event that multiple destination systems meet the pre-established criteria, the configuration network might select a system having a radio access technology similar to the system currently serving the wireless device (e.g., to minimize the amount of re-configuring required) or might request the user to manually select a system as detailed below with respect to step 611 of FIG. 6. In the event only one destination system meets the pre-established criteria, the sole destination system is selected by default.

Once the destination system has been selected, the configuration network retrieves (513) the configuration information for the selected system from either the pre-acquired configuration information stored in the configuration network's local database or in real time from the selected system (e.g., over an IP or other network). The configuration network then communicates (515) the retrieved configuration information to the wireless communication device, and the logic flow ends (509). The configuration network preferably communicates the configuration information to the wireless device prior to departure of the wireless device. However, the wireless device, upon receiving the new configuration information may re-configure itself at any time the device is powered-up, but preferably prior to the wireless device entering the service coverage area of the destination system to enable the wireless device to be used substantially immediately upon arrival at the user's destination.

FIG. 6 is a logic flow diagram 600 of steps executed by a wireless device configuration network to configure a wireless communication device for future operation in accordance with an alternative embodiment of the present invention. The logic flow begins (601) when the configuration network establishes (603) a communication with the wireless communication device and receives at least RAT information from the wireless device. In addition, the configuration network determines (605) a destination of the user of the wireless device. Based on the user's destination and the wireless device's RAT information, the configuration network determines (607) whether the wireless device is capable of operating in or on (i.e., is compatible, with) one or more wireless systems serving the user's destination. In this embodiment, steps 603,605, and 607 are preferably performed as described above with respect to steps 503, 505, and 507.

In the event that the configuration network determines (607) that the wireless device is not capable of operating in or on any destination system, no configuration information is sent to the device, and the logic flow ends (609). In this case, a message may be sent to the wireless device for display to the user to inform the user that use of the wireless device at the user's destination will not be possible. In addition, or alternatively, advertisements may be sent to the wireless device for display to the user to inform the user how and where to obtain (e.g., purchase or lease) a new wireless device that is compatible with at least one of the destination systems. The advertisements or other information communicated to the wireless device may provide the user the option to transfer information (e.g., the telephone number of the user's original wireless device) to the new wireless device to facilitate seamless service provision, albeit with a different wireless device.

On the other hand, in the event that the configuration network determines (607) that the wireless device is capable of operating in or on at least one destination system, the configuration network communicates (611) a signal to the wireless device that includes identities of compatible destination systems and requests selection of a destination system by the user of the wireless device. Thus, in this embodiment, the user of the wireless device has the option of manually selecting the destination system with which to configure the wireless device. In order to help the wireless device user make his or her selection, the configuration network may optionally acquire advertisements from the wireless systems (e.g., in real time or at the same time the configuration network acquired configuration information from the wireless systems for storage in the configuration network's local database) and transmit (613) or otherwise communicate the advertisements for the compatible systems to the wireless device for display to the device user. The advertisements may provide pricing information in accordance with pre-established roaming arrangements that exist between the destination system operators and the device's home system operator, and/or pricing and/or options for new subscription plans (e.g., when no roaming arrangement exists between the destination system operator and the operator of the device's home system). When the advertisements are acquired in real time, the configuration network may provide some information about the wireless device user to the destination systems to enable the destination systems to specifically tailor their advertisements to the device user. The configuration network may also include software that filters the identities of potential destination systems, such that only identities and advertisements of destination systems that have existing roaming arrangements with the device's home system operator are communicated to the user in steps 611 and 613.

Some time after communicating the identities of the destination system(s) and/or destination system operator advertisements to the wireless device, the configuration network receives (615) a signal from the wireless device (either over a wireless channel (e.g., when the configuration network is a wireless network, such as a Bluetooth network) or over a wired or optical link (e.g., when the configuration network includes an access node having a receptacle in which the wireless device is placed for re-configuration)) indicating selection of a desired destination system responsive to user input. That is, the configuration network receives the device user's selection of the destination system with which the wireless device is to be configured. Responsive to receiving the system selection signal from the wireless device, the configuration network retrieves (617) the configuration information for the selected destination system, either from the selected system in real time or from the configuration network's local configuration database, and communicates (619) the retrieved configuration information to the wireless device over an appropriate link or channel, thereby ending the logic flow (609).

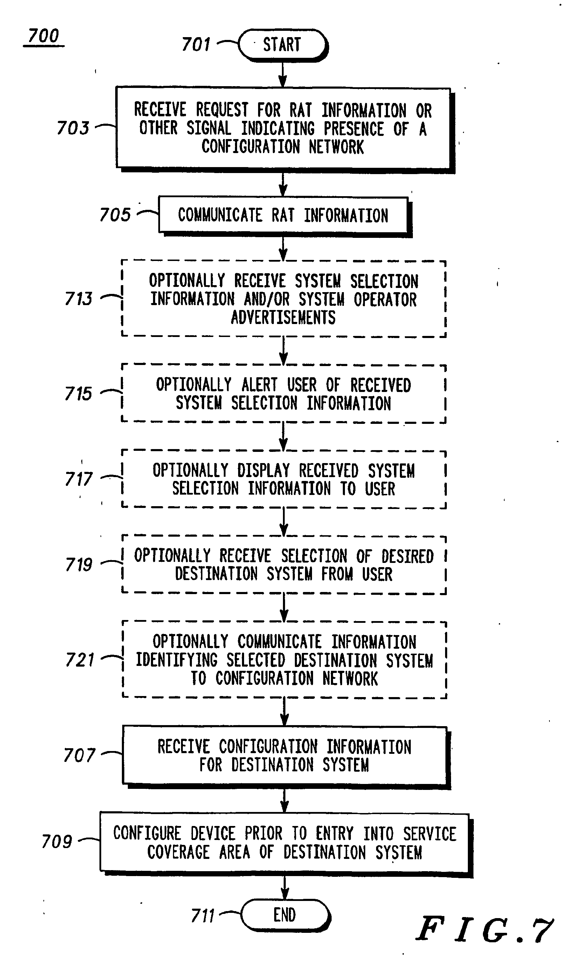

FIG. 7 is a logic flow diagram 700 of steps executed by a wireless communication device to configure the wireless communication device for future operation in accordance with the present invention. The logic flow begins (701) when the wireless device receives (703) a request for the device's RAT information or some other signal indicating the presence of a wireless device configuration network that is located near the departure location of the device user. As discussed above, the configuration network may be the wireless communication system on or in which the wireless device is currently operating or an independent network operably coupled (e.g., via an IP network) to the wireless device's home system, the system the wireless device is currently operating in or on, and the system or systems providing communication service to the wireless device user's destination. In a preferred embodiment, the wireless device configuration network is an independent Bluetooth network that includes an access node that is preferably located at an arrival/departure gate of a common carrier transportation device (e.g., an airplane, a train or a bus). Thus, the RAT information request or other signal is preferably received over an outbound Bluetooth link (e.g., an outbound broadcast link). Alternatively, the wireless configuration network may include an access node that has a receptacle in which the wireless communication device may be placed for configuration purposes. In such an alternative case, the wireless device may receive the RAT information request from the access node via a wireline or optical link.

Upon receiving the RAT information request or other signal, the wireless device communicates (705) its RAT information and preferably other information (e.g., wireless device ID, user ID, requested or required services, and/or encryption information used for, among other things, authentication) to the configuration network over a communication link similar to the link over which the wireless device received the RAT information request. One of ordinary skill in the art will appreciate that when the wireless device configuration network is the wireless device's home system, the wireless device's RAT information may not be requested or received because the provisioning portion of the home system may already have such information stored in a database.

Some time after communicating its RAT information to the configuration network, the wireless device receives (707) configuration information for a compatible system providing communication service at a destination of the wireless device and its user. Upon receiving the configuration information for the destination system, the wireless device configures (709) itself for operation in the destination system prior to entering a service coverage area of the destination system (and preferably immediately after receiving the configuration information), and the logic flow ends (711). To configure itself, the wireless device initiates and activates appropriate hardware and software as necessary to operate in accordance with the radio access technology identified in the configuration information. In addition, the wireless device preferably modifies the device's setup and other display menus to correspond to the menus normally used during operation of the wireless device in the destination system. Further, the wireless device preferably configures all desired features, such as call forwarding, caller ID, and short message service, that may be used in the destination system.

In a preferred embodiment, the configuration network automatically selects a destination system for configuration of the wireless device responsive to receipt of the wireless device's RAT information. As discussed in detail above; such selection is preferably based on the existence of a roaming arrangement between the destination system operator and the operator of the wireless device's home system.

Alternatively, when multiple destination systems are equally preferable or non-preferable from the perspective of the configuration network (e.g., because multiple destination system operators have roaming arrangements with the wireless device's home system operator or because no destination system operators have such roaming arrangements), the configuration network may request that the wireless device user manually select the destination system for configuration of the wireless device. In such a case, some time after transmitting (705) its RAT information, the wireless device receives (713) system selection information and/or advertisements from the wireless device configuration network. The system selection information preferably includes sufficient information to enable the user of the wireless device to select one of the destination systems upon or within which to operate the wireless device after the user arrives at his or her destination. Accordingly, the system selection information at least includes the identities of the destination systems from which a desired system is to be selected. The system selection information may include other information, such as usage costs, discounts (e.g., discounts related to an airline or participation in an airline's frequent flyer program), and/or available services.

When operators of multiple destination systems have roaming or other similar arrangements with the operator of the wireless device's home system, the destination systems identified in the system selection information preferably include only those systems covered by the roaming or other arrangements. Alternatively, when operators of the identified destination systems do not have roaming or other similar arrangements with the operator of the wireless device's home system, the system selection information preferably includes sufficient information (e.g., a subscription application form) to enable the wireless device user to negotiate and establish a permanent subscription, a temporary subscription (e.g., prepaid minutes or other units), or some hybrid subscription and roaming arrangement with the operator of the destination system.

In this embodiment, after receiving the system selection information and/or advertisements, the wireless device preferably alerts (715) the user of the wireless device by activating an alerting device within the wireless device in accordance with known techniques and displays (717) the received system selection information and/or advertisements to the wireless device user. The system selection information is preferably displayed on a visual display device, such as an LCD display, but may alternatively or additionally be displayed audibly.

Some time after displaying the system selection information and/or advertisements, the wireless device in this embodiment receives (719) the user's selection of the desired destination system via a user interface of the wireless device. As discussed above, the user interface may be a hand-manipulated interface, such as a keyboard, a keypad, a touchscreen, a touchpad, a computer mouse or rollerball, a thumbwheel, or any other similar interface. Alternatively, the user interface may be voice-activated, such as a speech recognition interface. After the wireless device has received the user's selection of a desired system, the wireless device communicates (721) information identifying the selected destination system to the configuration network. The logic flow then continues at step 707 where the wireless device receives (707) the configuration information and then configures (709) itself accordingly.

The present invention encompasses a method and apparatus for configuring a wireless communication device operating in a first wireless communication system for future operation in a second wireless communication system serving a destination of the wireless device and/or its user. With this invention, wireless devices may be configured for future operation at the time of departure from a present communication system (e.g., at an airline departure gate), such that the devices are ready for operation substantially at the time of arrival at the device user's destination. In contrast to prior art approaches in which a wireless device must perform system searching and device configuration operations upon arrival at the device user's destination, thereby incurring substantial delays prior to being useable by the device user, the present invention provides a network for performing necessary wireless device configuration prior to entry of the wireless device into a wireless system serving a destination of the device user, thereby enabling the wireless device to be useable almost immediately upon the device user's arrival at his or her destination (except for normal delays associated with registering in the destination system and acquiring synchronization if necessary). In addition, the present invention provides a procedure that allows the device user to negotiate and/or obtain a subscription, roaming, or other arrangement to use the destination system prior to arrival in the destination system, instead of having to make such an arrangement upon arrival and adding further delays prior to initial system use. Further, by using a configuration network to configure the wireless device prior to arrival at the destination (and preferably just prior to departure of the device user), the present invention eliminates or at least substantially reduces the wireless device memory requirements associated with storing configuration data for multiple systems.

In the foregoing specification, the present invention has been described with reference to specific embodiments. However, one of ordinary skill in the art will appreciate that various modifications and changes may be made without departing from the scope of the present invention as set forth in the appended claims. For example, the access node 201 of the wireless device configuration network 103 may include a receptacle in which the wireless device 109 may be placed to facilitate transmission of the new configuration information either through a wireline connection or a non-radio wireless connection (e. g. , an optical link). Accordingly, the specification and drawings are to be regarded in an illustrative rather than a restrictive sense, and all such modifications are intended to be included within the scope of the present invention.

Benefits, other advantages, and solutions to problems have been described above with regard to specific embodiments of the present invention. However, the benefits, advantages, solutions to problems, and any element (s) that may cause or result in such benefits, advantages, or solutions, or cause such benefits, advantages, or solutions to become more pronounced are not to be construed as a critical, required, or essential feature or element of any or all the claims. As used herein and in the appended claims, the term"comprises,""comprising,"or any other variation thereof is intended to refer to a non-exclusive inclusion, such that a process, method, article of manufacture, or apparatus that comprises a list of elements does not include only those elements in the list, but may include other elements not expressly listed or inherent to such process, method, article of manufacture, or apparatus.

## Claims

1. A method for use in a system configuration controller (203) operating in a first wireless communication system (101) for sending configuration information to a wireless device (109) operating in the first wireless communication system (101) for operation in a second wireless communication system (105), the method comprising the steps of :
determining a destination (505) of the wireless communication device by accessing a database (109) containing destination information, wherein the destination is serviced by the second wireless communication system (105); and
communicating (515) configuration information for the second wireless communication system (105) to the wireless communication device (109) from the database prior to the wireless communication device (109) arriving at the destination to allow operation of the wireless communication device (109) in the second wireless communication system (105) on arrival at the destination.

2. The method of claim 1, wherein the step of determining a destination (505) of the wireless communication device comprises the step of :
accessing at least one records database of at least one common carrier transportation company, wherein the at least one records database contains information related to at least one of a destination of a common carrier transportation device that will transport a user of the wireless communication device and a final destination of the user of the wireless communication device.

3. The method of claim 1, further comprising the step of :
prior to the step of communicating (515) the configuration information, retrieving the configuration information from the second wireless communication system.

4. The method of claim 3, further comprising the steps of :
storing the configuration information retrieved from the second wireless communication system in a database; and
retrieving the configuration information from the database.

5. The method of claim 1, further comprising the steps of :
determining whether the wireless communication device is capable of operating in at least one of a plurality of wireless communication systems servicing the destination of the wireless communication device; and
automatically selecting a particular wireless communication system of the plurality of wireless communication systems as the second wireless communication system in the event that the wireless communication device is capable of operating in at least one of the plurality of wireless communication systems.

6. The method of claim 5, wherein selection of the particular wireless communication system is based at least on whether a roaming arrangement exists between an operator of a wireless communication system in which the wireless communication device is provisioned and an operator of the particular wireless communication system.

7. The method of claim 5, wherein the step of determining whether the wireless communication device is capable of operating in at least one of a plurality of wireless communication systems comprises the step of determining whether the wireless communication device is compatible with a radio access technology utilized by at least one of a plurality of wireless communication systems.

8. The method of claim 1, further comprising the steps of :
determining whether the wireless communication device is capable of operating in at least one of a plurality of wireless communication systems serving the destination of the wireless communication device;
in the event that the wireless communication device is capable of operating in at least one of the plurality of wireless communication systems,
communicating a signal to the wireless communication device requesting selection of one of the plurality of wireless communication systems; and
receiving a signal indicating selection of a particular wireless communication system of the plurality of wireless communication systems as the second wireless communication system.

9. The method of claim 1, wherein the step of determining the destination of the wireless communication device comprises the step of determining a destination of a user of the wireless communication device.

10. The method of claim 1, wherein the step of determining the destination of the wireless communication device comprises the step of determining a destination of a common carrier transportation device that will transport a user of the wireless communication device.

11. The method of claim 1, wherein the steps of determining and communicating are performed by a wireless device configuration network operably coupled to the first wireless communication system and the second wireless communication system, wherein the wireless device configuration network is positioned near a location from which a user of the wireless communication device will depart from the first wireless communication system.

12. The method of claim 11, wherein the wireless device configuration network comprises a Bluetooth network.

13. A method for use in a wireless communication device for receiving configuration information from a system configuration controller (203) operating (109) in a first wireless communication system (101) to operate in one of a plurality of wireless communication systems serving a destination of a user of the wireless communication device (109) prior to the user arriving at the destination, the method comprising the steps of:
communicating radio access technology information (705) to facilitate a determination of whether the wireless communication device (109) is capable of operating in at least one of the plurality of wireless communication systems; and
receiving configuration information (707) for a selected wireless communication system of the plurality of wireless communication systems prior to the wireless communication device (109) arriving at the destination in the event that the wireless communication device (109) is capable of operating in at least one of the plurality of wireless communication systems; and
using the received configuration information to configure the wireless communication device (109) to operate in the selected wireless communication system.

14. The method of claim 13, wherein the steps of communicating and receiving are performed over a Bluetooth communication link established between the wireless communication device and a wireless device configuration network positioned near a location from which the user of the wireless communication device will depart for the destination.

15. The method of claim 13, further comprising the steps of : receiving system selection information to allow the user of the wireless communication device to select one of the plurality of wireless communication systems within which to operate the wireless communication device after arriving at the destination to produce the selected wireless communication system; and
communicating information identifying the selected wireless communication system.

16. The method of claim 15, further comprising the step of displaying the system selection information to the user of the wireless communication device.

17. The method of claim 15, further comprising the step of alerting the user of the wireless communication device upon receipt of the system selection information.

18. The method of claim 15, further comprising the step of receiving advertisement information related to at least some of the plurality of wireless communication systems.

19. The method of claim 15, wherein the system selection information identifies particular wireless communication systems of the plurality of wireless communication systems operated by operators that have pre-established roaming arrangements with an operator of a wireless communication system in which the wireless communication device is provisioned.

20. The method of claim 15, wherein the system selection information includes information necessary to establish a subscription with an operator of the selected wireless communication system.

21. A communication network comprising:
a system configuration controller (203) operably coupled to a second wireless communication system (105) and positioned near a location from which a user of a wireless communication device (109) will depart from a service coverage area of a first wireless communication system (101), the system configuration controller (203) determining a destination of the user of the wireless communication device (109) by accessing a database containing destination information and communicating configuration information for the second wireless communication system (105) to the wireless communication device (109) based on the destination; and
a communication link operably coupling the system configuration controller (203) to the wireless communication device (109) to facilitate transmission of the configuration information.

22. The network of claim 21, further comprising a database (205) operably coupled to the system configuration controller (203), wherein the database includes the configuration information for the second wireless communication system (105).

23. The network of claim 21, further comprising:
an access node (201) operably coupled to the system configuration controller (203) and positioned near a location at which the user of the wireless communication device (109) will board a common carrier transportation device, wherein the access node (201) includes a transmitter (213) for wirelessly communicating the configuration information to the wireless communication device (109) and a receiver (215) for wirelessly receiving information related to radio access technology capabilities of the wireless communication device (109).

24. A wireless communication device (109) comprising:
a memory (311) that stores radio access technology information indicating which radio access technologies are compatible with the wireless communication device;
a transmitter (305), operably coupled to the memory (311), that transmits the radio access technology information to a system configuration controller (203) to enable the system configuration controller to determine whether the wireless communication device is capable of operating in at least one of a plurality of wireless communication systems providing communication service at a destination of the wireless communication device; and
a receiver (307) that receives system configuration information from the system configuration controller (203) for a selected wireless communication system of the plurality of wireless communication systems prior to the wireless communication device arriving at the destination, wherein the selected communication system is chosen based at least on the radio access technology information; and
a processor (309) arranged to use the received system configuration information to reconfigure the wireless communication device to operate in the selected communication system.

25. The wireless communication device of claim 24, wherein the receiver (307) further receives system selection information from the system configuration controller to facilitate user selection of one of the plurality of wireless communication systems, the wireless communication device further comprising:
a display (315), operably coupled to the receiver (307), that displays the system selection information; and
a user interface (313), operably coupled to the transmitter (305), that enables a user of the wireless communication device to select one of the plurality of wireless communication systems to produce the selected wireless communication system.

26. The wireless communication device of claim 25, further comprising an alerting device (317), operably coupled to the receiver (307), that alerts the user of the wireless communication device upon receipt of the system selection information.

## Patentansprüche

1. Verfahren zur Verwendung in einer Systemkonfigurationssteuerung (203), welche in einem ersten drahtlosen Kommunikationssystem (101) zum Senden von Konfigurationsinformationen an eine in dem ersten drahtlosen Kommunikationssystem (101) arbeitende drahtlose Vorrichtung (109) für den Betrieb in einem zweiten drahtlosen Kommunikationssystem (105), arbeitet, wobei das Verfahren die folgenden Schritte aufweist:
Bestimmung eines Zielorts (505) der drahtlosen Kommunikationsvorrichtung durch Zugriff auf eine Datenbank (109), welche Zielortinformationen enthält, wobei der Zielort von dem zweiten drahtlosen Kommunikationssystem (105) bedient wird; und
Übermittlung (515) von Konfigurationsinformationen für das zweite drahtlose Kommunikationssystem (105) an die drahtlose Kommunikationsvorrichtung (109) von der Datenbank, bevor die drahtlose Kommunikationsvorrichtung (109) den Zielort erreicht, um einen Betrieb der drahtlosen Kommunikationsvorrichtung (109) in dem zweiten drahtlosen Kommunikationssystem (105) bei Ankunft am Zielort zu ermöglichen.

2. Verfahren nach Anspruch 1, **dadurch gekennzeichnet, dass** der Schritt der Bestimmung eines Zielorts (505) der drahtlosen Kommunikationsvorrichtung den folgenden Schritt aufweist:
Zugriff auf mindestens eine Aufzeichnungs-Datenbank mindestens einer Telefongesellschaft, wobei die mindestens eine Aufzeichnungs-Datenbank Informationen enthält, welche mindestens einen Zielort einer Telefongesellschaft betreffen, welche einen Benutzer der drahtlosen Kommunikationsvorrichtung und einen endgültigen Zielort des Benutzers der drahtlosen Kommunikationsvorrichtung transportiert.

3. Verfahren nach Anspruch 1, welches des Weiteren den folgenden Schritt aufweist:
vor dem Schritt der Übermittlung (515) der Konfigurationsinformationen, Abrufen der Konfigurationsinformationen von dem zweiten drahtlosen Kommunikationssystem.

4. Verfahren nach Anspruch 3, welches des Weiteren die folgenden Schritte aufweist:
Speichern der von dem zweiten drahtlosen Kommunikationssystem abgerufenen Konfigurationsinformationen in einer Datenbank; und
Abrufen der Konfigurationsinformationen von der Datenbank.

5. Verfahren nach Anspruch 1, welches des Weiteren die folgenden Schritte aufweist:
Bestimmung, ob die drahtlose Kommunikationsvorrichtung in der Lage ist, in mindestens einem aus einer Vielzahl von drahtlosen Kommunikationssystemen zu arbeiten, welche den Zielort der drahtlosen Kommunikationsvorrichtung bedienen; und
automatische Auswahl eines bestimmten drahtlosen Kommunikationssystems aus der Vielzahl drahtloser Kommunikationssysteme als die zweite drahtlose Kommunikationsvorrichtung in dem Fall, dass die drahtlose Kommunikationsvorrichtung in der Lage ist, in mindestens einem aus der Vielzahl von drahtlosen Kommunikationssystemen zu arbeiten.

6. Verfahren nach Anspruch 5, **dadurch gekennzeichnet, dass** die Auswahl des bestimmten drahtlosen Kommunikationssystems zumindest darauf basiert, ob eine Roaming-Abmachung zwischen einem Betreiber eines drahtlosen Kommunikationssystems, in welchem die drahtlose Kommunikationsvorrichtung bereitgestellt ist, und einem Betreiber des bestimmten drahtlosen Kommunikationssystems vorhanden ist bzw. existiert.

7. Verfahren nach Anspruch 5, **dadurch gekennzeichnet, dass** der Schritt der Bestimmung, ob die drahtlose Kommunikationsvorrichtung in der Lage ist, in zumindest einem aus einer Vielzahl von drahtlosen Kommunikationssystemen zu arbeiten, den Schritt der Bestimmung aufweist, ob die drahtlose Kommunikationsvorrichtung mit einer Funk-Zugriffstechnologie kompatibel ist, welche von mindestens einem aus einer Viel- zahl von drahtlosen Kommunikationssystemen verwendet wird.

8. Verfahren nach Anspruch 1, welches des Weiteren die folgenden Schritte aufweist:
Bestimmung, ob die drahtlose Kommunikationsvorrichtung in der Lage ist, in mindestens einem aus der Vielzahl von drahtlosen Kommunikationssystemen zu arbeiten, welche den Zielort der drahtlosen Kommunikationsvorrichtung bedienen;
im Fall, dass die drahtlose Kommunikationsvorrichtung in der Lage ist, in mindestens einem aus der Vielzahl von drahtlosen Kommunikationssystemen zu arbeiten,
Kommunizieren eines Signals an die drahtlose Kommunikationsvorrichtung, welches eine Selektion eines aus der Vielzahl von drahtlosen Kommunikationssystemen anfordert; und
Empfang eines Signals, welches eine Auswahl eines bestimmten drahtlosen Kommunikationssystems aus der Vielzahl von drahtlosen Kommunikationssystemen as das zweite drahtlose Kommunikationssystem anzeigt.

9. Verfahren nach Anspruch 1, **dadurch gekennzeichnet, dass** der Schritt der Bestimmung des Zielorts der drahtlosen Kommunikationssvorrichtung den Schritt der Bestimmung eines Zielorts eines Benutzers der drahtlosen Kommunikationssvorrichtung aufweist.

10. Verfahren nach Anspruch 1, **dadurch gekennzeichnet, dass** der Schritt der Bestimmung des Zielorts der drahtlosen Kommunikationssvorrichtung den Schritt der Bestimmung einer Telefongesellschafts-Einrichtung aufweist, welche einen Benutzer der drahtlosen Kommunikationsvorrichtung transportiert.

11. Verfahren nach Anspruch 1, **dadurch gekennzeichnet, dass** die Schritte der Bestimmung und der Übermittlung eines Konfigurationsnetzwerks der drahtlosen Vorrichtung durchgeführt werden, welches an das erste drahtlose Kommunikationssystem und an das zweite drahtlose Kommunikationssystem betriebsbereit gekoppelt ist, wobei das Konfigurationsnetzwerk der drahtlosen Vorrichtung in der Nähe eines Standortes angeordnet ist, von welchem aus sich ein Benutzer der drahtlosen Kommunikationsvorrichtung von dem ersten drahtlosen Kommunikationssystem entfernt.

12. Verfahren nach Anspruch 11, **dadurch gekennzeichnet, dass** das Konfigurationsnetzwerk der drahtlosen Vorrichtung ein Bluetooth-Netzwerk aufweist.

13. Verfahren zur Verwendung in einer drahtlosen Kommunikationsvorrichtung zum Empfang von Konfigurationsinformationen von einer Systemkonfigurationssteuerung (203), welche in einem ersten drahtlosen Kommunikationssystem (101) arbeitet, um in einem aus einer Vielzahl von drahtlosen Kommunikationssystemen zu arbeiten, welche einen Zielort eines Benutzers der drahtlosen Kommunikationsvorrichtung (109) bedienen, bevor der Benutzer am Zielort eintrifft, wobei das Verfahren die folgenden Schritte aufweist:
Übermittlung von Funk-Zugriffstechnologieinformationen (705) zur Vereinfachung einer Bestimmung, ob die drahtlose Kommunikationsvorrichtung (109) in der Lage ist, in mindestens einem aus der Vielzahl von drahtlosen Kommunikationssystemen zu arbeiten; und
Empfang von Konfigurationsinformationen (707) für ein ausgewähltes drahtloses Kommunikationssystem aus der Vielzahl von drahtlosen Kommunikationssystemen, bevor die drahtlose Kommunikationsvorrichtung (109) am Zielort in dem Fall eintrifft, dass die drahtlose Kommunikationsvorrichtung (109) in der Lage ist, in zumindest einem aus der Vielzahl von drahtlosen Kommunikationssystemen zu arbeiten; und
Verwendung der empfangenen Konfigurationsinformationen zur Konfiguration der drahtlosen Kommunikationsvorrichtung (109), um in dem ausgewählten drahtlosen Kommunikationssystem zu arbeiten.

14. Verfahren nach Anspruch 13, **dadurch gekennzeichnet, dass** die Schritte der Übermittlung und des Empfangs über eine Bluetooth-Nachrichtenverbindung ausgeführt werden, welche zwischen der drahtlosen Kommunikationsvorrichtung und einem Konfigurationsnetzwerk der drahtlosen Vorrichtung, das in der Nähe eines Standorts angeordnet ist, von welchem aus der Benutzer der drahtlosen Kommunikationsvorrichtung zum Zielort aufbricht.

15. Verfahren nach Anspruch 13, welches des Weiteren die folgenden Schritte aufweist:
Empfang von Systemauswahlinformationen, um es dem Benutzer der drahtlosen Kommunikationsvorrichtung zu ermöglichen, eines aus der Vielzahl von drahtlosen Kommunikationssystemen auszuwählen, in welchem die drahtlose Kommunikationsvorrichtung arbeiten soill, nachdem sie am Zielort zur Erzeugung des ausgewählten drahtlosen Kommunikationssystems eingetroffen ist; und
Übermittlung von Informationen, welche das ausgewählte drahtlose Kommunikationssystem identifizieren.

16. Verfahren nach Anspruch 15, welches des Weiteren den Schritt des Anzeigens der Systemauswahlinformationen für den Benutzer der drahtlosen Kommunikationsvorrichtung aufweist.

17. Verfahren nach Anspruch 15, welches des Weiteren den Schritt der Warnung des Benutzers der drahtlosen Kommunikationsvorrichtung nach Erhalt der Systemauswahlinformationen aufweist.

18. Verfahren nach Anspruch 15, welches des Weiteren den Schritt des Empfangs von Werbeinformationen aufweist, welche in Beziehung zu zumindest einigen aus der Vielzahl von drahtlosen Kommunikationssystemen stehen.

19. Verfahren nach Anspruch 15, **dadurch gekennzeichnet, dass** die Systemauswahlinformationen spezifische drahtlose Kommunikationssysteme aus der Vielzahl von drahtlosen Kommunikationssystemen identifizieren, welche von Betreibern bedient werden, welche vorher festgelegte Roaming-Abmachungen mit einem Betreiber eines drahtlosen Kommunikationssystems, in welchem die drahtlose Kommunikationsvorrichtung eingerichtet ist, aufweisen.

20. Verfahren nach Anspruch 15, **dadurch gekennzeichnet, dass** die Systemauswahlinformationen Informationen einschließen, welche für die Einrichtung eines Abonnements mit einem Betreiber des ausgewählten drahtlosen Kommunikationssystems erforderlich sind.

21. Kommunikationsnetzwerk, welches Folgendes aufweist:
eine Systemkonfigurationssteuerung (203), welche betriebsbereit an ein zweites drahtloses Kommunikationssystem (105) gekoppelt ist, und in der Nähe eines Standorts angeordnet ist, von welchem aus ein Benutzer einer drahtlosen Kommunikationsvorrichtung (109) sich von einer Flächendeckung eines ersten drahtlosen Kommunikationssystems (101) entfernt, wobei die Systemkonfigurationssteuerung (203) einen Zielort des Benutzers der drahtlosen Kommunikationsvorrichtung (109) durch Zugriff auf eine Datenbank bestimmt, welche Zielortinformationen enthält und Konfigurationsinformationen für das zweite drahtlose Kommunikationssystem (105) an die drahtlose Kommunikationsvorrichtung (109) basierend auf dem Zielort übermittelt; und
eine Nachrichtenverbindung, welche die Systemkonfigurationssteuerung (203) an die drahtlose Kommunikationsvorrichtung (109) koppelt, um eine Übertragung der Konfigurationsinformationen zu erleichtern bzw. zu unterstützen.

22. Netzwerk nach Anspruch 21, welches des Weiteren eine Datenbank (205) aufweist, welche betriebsbereit an die Systemkonfigurationssteuerung (203) gekoppelt ist, wobei die Datenbank die Konfigurationsinformationen für das zweite drahtlose Kommunikationssystem (105) einschließt.

23. Netzwerk nach Anspruch 21, welches des Weiteren Folgendes aufweist:
einen Zugriffsknoten (201), welcher betriebsbereit an die Systemkonfigurationssteuerung (203) gekoppelt ist und in der Nähe eines Standorts angeordnet ist, an welchem der Benutzer der drahtlosen Kommunikationsvorrichtung (109) eine Telefongesellschaft in Anspruch nimmt, wobei der Zugriffsknoten (201) einen Sender (213) zur drahtlosen Übermittlung der Konfigurationsinformationen an die drahtlose Kommunikationsvorrichtung (109) und einen Empfänger (215) zum drahtlosen Empfang von Informationen in Zusammenhang mit Funk-Zugriffstechnologiefähigkeit der drahtlosen Kommunikationsvorrichtung (109) einschließt.

24. Drahtlose Kommunikationsvorrichtung (109), welche Folgendes aufweist:
einen Speicher (311), welcher Funk-Zugriffstechnologieinformationen speichert, welche anzeigen, welche Funk-Zugriffstechnologien mit der drahtlosen Kommunikationsvorrichtung kompatibel sind;
einen Sender (305), welcher betriebsbereit mit dem Speicher (311) verbunden ist, wobei der Sender die Funk-Zugriffstechnologieinformationen an eine Systemkonfigurationssteuerung (203) sendet, um es dieser zu ermöglichen, zu bestimmen, ob die drahtlose Kommunikationsvorrichtung in der Lage ist, in zumindest einem aus einer Vielzahl von drahtlosen Kommunikationssystemen, welche einen Nachrichtendienst an einem Zielort der drahtlosen Kommunikationsvorrichtung bereitstellen, zu arbeiten; und
einem Empfänger (307), welcher Systemkonfigurationsinformationen von der Systemkonfigurationssteuerung (203) für ein ausgewähltes drahtloses Kommunikationssystem aus der Vielzahl von drahtlosen Kommunikationssystemen empfängt, bevor die drahtlose Kommunikationsvorrichtung am Zielort ankommt, wobei das ausgewählte Kommunikationssystem basierend zumindest auf den Funk-Zugriffstechnologieinformationen ausgewählt wird; und
einen Prozessor (309), welcher zur Verwendung der empfangenen Systemkonfigurationsinformationen zur Neukonfiguration der drahtlosen Kommunikationsvorrichtung angeordnet ist, damit diese in dem ausgewählten Kommunikationssystem arbeitet.

25. Drahtlose Kommunikationsvorrichtung nach Anspruch 24, **dadurch gekennzeichnet, dass** der Empfänger (307) des Weiteren Systemauswahlinformationen von der Systemkonfigurationssteuerung empfängt, um eine Auswahl eines Benutzers eines aus der Vielzahl von drahtlosen Kommunikationssystemen zu erleichtern bzw. zu unterstützen, wobei die drahtlose Kommunikationsvorrichtung des Weiteren Folgendes aufweist:
eine Anzeige (315), welche betriebsbereit an den Empfänger (307) gekoppelt ist, wobei die Anzeige die Systemauswahlinformationen anzeigt; und
eine Benutzerschnittstelle (313), welche betriebsbereit an den Sender (305) gekoppelt ist, wobei es die Benutzerschnittstelle einem Benutzer der drahtlosen Kommunikationsvorrichtung ermöglicht, eines aus der Vielzahl von drahtlosen Kommunikationssystemen zur Erzeugung des ausgewählten drahtlosen Kommunikationssystems auszuwählen.

26. Drahtlose Kommunikationsvorrichtung nach Anspruch 25, welche des Weiteren eine Warnvorrichtung (317) aufweist, welche betriebsbereit an den Empfänger (307) gekoppelt ist, wobei die Warnvorrichtung den Benutzer der drahtlosen Kommunikationsvorrichtung nach Erhalt der Systemsauswahlinformationen warnt bzw. aufmerksam macht.

## Revendications

1. Procédé d'utilisation dans un dispositif de commande de configuration de système (203) fonctionnant dans un premier système de communication sans fil (101) pour transmettre des informations de configuration à un dispositif sans fil (109) fonctionnant dans le premier système de communication sans fil (101) pour l'opération dans un deuxième système de communication sans fil (105), le procédé comprenant les étapes de:
déterminer une destination (505) du dispositif de communication sans fil en accédant à une base de données (109) contenant des informations de destination, où la destination est desservie par le deuxième système de communication sans fil (105); et
communiquer (515) les informations de configuration pour le deuxième système de communication sans fil (105) au dispositif de communication sans fil (109) de la base de données avant que le dispositif de communication sans fil (109) n'arrive à destination pour permettre le fonctionnement du dispositif de communication sans fil (109) dans le deuxième système de communication sans fil (105) lors de l'arrivée à destination.

2. Procédé selon la revendication 1, dans lequel l'étape de détermination d'une destination (505) du dispositif de communication sans fil comprend l'étape de:
accéder au moins à une base de données d'enregistrement d'au moins une compagnie de transport de support commun, où la au moins une base de données d'enregistrement contient des informations se rapportant à au moins une d'une destination d'un dispositif de transport de support commun qui transportera un utilisateur du dispositif de communication sans fil et d'une destination finale de l'utilisateur du dispositif de communication sans fil.

3. Procédé selon la revendication 1, comprenant en outre l'étape de:
avant l'étape de communication (515) de l'information de configuration, extraire l'information de configuration du deuxième système de communication sans fil.

4. Procédé selon la revendication 3, comprenant en outre les étapes de:
stocker les informations de configuration extraites du deuxième système de communication sans fil dans une base de données; et
extraire l'information de configuration de la base de données.

5. Procédé selon la revendication 1, comprenant en outre les étapes de:
déterminer si le dispositif de communication sans fil est apte à fonctionner dans au moins un d'une pluralité de systèmes de communication sans fil desservant la destination du dispositif de communication sans fil; et
sélectionner automatiquement un système de communication sans fil particulier de la pluralité de systèmes de communication sans fil comme deuxième système de communication sans fil dans le cas où le dispositif de communication sans fil est apte à fonctionner dans au moins un de la pluralité de systèmes de communication sans fil.

6. Procédé selon la revendication 5, dans lequel la sélection du système de communication sans fil particulier est basée au moins sur l'existence d'un agencement d'itinérance entre un opérateur d'un système de communication sans fil dans lequel le dispositif de communication sans fil est approvisionné et un opérateur du système de communication sans fil particulier.

7. Procédé selon la revendication 5, dans lequel l'étape de détermination, si le dispositif de communication sans fil est apte à fonctionner dans au moins un d'une pluralité de systèmes de communication sans fil, comprend l'étape consistant à déterminer si le dispositif de communication sans fil est compatible avec une technologie d'accès radio utilisée par au moins un d'une pluralité de systèmes de communication sans fil.

8. Procédé selon la revendication 1, comprenant en outre les étapes de:
déterminer si le dispositif de communication sans fil est apte à fonctionner dans au moins un d'une pluralité de systèmes de communication sans fil desservant la destination du dispositif de communication sans fil;
dans le cas où le dispositif de communication sans fil est apte à fonctionner dans au moins une de la pluralité de systèmes de communication sans fil,
communiquer un signal au dispositif de communication sans fil demandant la sélection d'un de la pluralité de systèmes de communication sans fil; et
recevoir un signal indiquant la sélection d'un système de communication sans fil particulier de la pluralité de systèmes de communication sans fil comme deuxième système de communication sans fil.

9. Procédé selon la revendication 1, dans lequel l'étape de détermination de la destination du dispositif de communication sans fil comprend l'étape consistant à déterminer une destination d'un utilisateur du dispositif de communication sans fil.

10. Procédé selon la revendication 1, dans lequel l'étape de détermination de la destination du dispositif de communication sans fil comprend l'étape consistant à déterminer une destination d'un dispositif de transport de support commun qui transportera un utilisateur du dispositif de communication sans fil.

11. Procédé selon la revendication 1, dans lequel les étapes consistant à déterminer et à communiquer sont exécutées par un réseau de configuration de dispositif sans fil fonctionnellement couplé au premier système de communication sans fil et au deuxième système de communication sans fil, où le réseau de configuration de dispositif sans fil est positionné près d'un emplacement à partir duquel un utilisateur du dispositif de communication sans fil partira du premier système de communication sans fil.

12. Procédé selon la revendication 11, dans lequel le réseau de configuration de dispositif sans fil comprend un réseau Bluetooth.

13. Procédé d'utilisation dans un dispositif de communication sans fil pour recevoir des informations de configuration d'un dispositif de commande de configuration de système (203) fonctionnant (109) dans un premier système de communication sans fil (101) pour fonctionner dans un d'une pluralité de systèmes de communication sans fil desservant une destination d'un utilisateur du dispositif de communication sans fil (109) avant que l'utilisateur n'arrive à destination, le procédé comprenant les étapes de:
communiquer des informations de technologie d'accès radio (705) pour faciliter une détermination pour savoir si le dispositif de communication sans fil (109) est apte à fonctionner dans au moins un de la pluralité de systèmes de communication sans fil; et
recevoir des informations de configuration (707) pour un système de communication sans fil sélectionné de la pluralité de systèmes de communication sans fil avant que le dispositif de communication sans fil (109) n'arrive à destination dans le cas où le dispositif de communication sans fil (109) est apte à fonctionner dans au moins un de la pluralité de systèmes de communication sans fil; et
utiliser les informations de configuration reçues pour configurer le dispositif de communication sans fil (109) pour qu'il fonctionne dans le système de communication sans fil sélectionné.

14. Procédé selon la revendication 13, dans lequel les étapes de communication et de réception sont exécutées par une liaison de communication Bluetooth établie entre le dispositif de communication sans fil et un réseau de configuration de dispositif sans fil positionné près d'un emplacement à partir duquel l'utilisateur du dispositif de communication sans fil partira pour la destination.

15. Procédé selon la revendication 13, comprenant en outre les étapes de: recevoir des informations de sélection de système pour permettre à l'utilisateur du dispositif de communication sans fil de sélectionner un de la pluralité de systèmes de communication sans fil dans lequel il fait fonctionner le dispositif de communication sans fil après l'arrivée à destination pour produire le système de communication sans fil sélectionné; et
communiquer les informations identifiant le système de communication sans fil sélectionné.

16. Procédé selon la revendication 15, comprenant en outre l'étape consistant à afficher les informations de sélection de système à l'utilisateur du dispositif de communication sans fil.

17. Procédé selon la revendication 15, comprenant en outre l'étape consistant à alerter l'utilisateur du dispositif de communication sans fil lors de la réception des informations de sélection de système.

18. Procédé selon la revendication 15, comprenant en outre l'étape consistant à recevoir des informations publicitaires se rapportant à au moins un de la pluralité de systèmes de communication sans fil.

19. Procédé selon la revendication 15, dans lequel les informations de sélection de système identifient des systèmes de communication sans fil particuliers de la pluralité de systèmes de communication sans fil amenés à fonctionner par des opérateurs qui ont des agencements d'itinérance préétablis avec un opérateur d'un système de communication sans fil dans lequel le dispositif de communication sans fil est approvisionné.

20. Procédé selon la revendication 15, dans lequel les informations de sélection de système comprennent des informations nécessaires pour établir une souscription avec un opérateur du système de communication sans fil sélectionné.

21. Réseau de communication comprenant:
un dispositif de commande de configuration de système (203) fonctionnellement couplé à un deuxième système de communication sans fil (105) et positionné près d'un emplacement duquel un utilisateur du dispositif de communication sans fil (109) partira d'une zone de couverture de services d'un premier système de communication sans fil (101), le dispositif de commande de configuration de système (203) déterminant une destination de l'utilisateur du dispositif de communication sans fil (109) en accédant à une base de données contenant des informations de destination et communiquant des informations de configuration pour le deuxième système de communication sans fil (105) au dispositif de communication sans fil (109) sur la base de la destination; et
une liaison de communication couplant fonctionnellement le dispositif de commande de configuration de système (203) au dispositif de communication sans fil (109) pour faciliter la transmission des informations de configuration.

22. Réseau selon la revendication 21, comprenant en outre une base de données (205) fonctionnellement couplée au dispositif de commande de configuration du système (203), où la base de données comporte les informations de configuration pour le deuxième système de communication sans fil (105).

23. Réseau selon la revendication 21, comprenant en outre:
un noeud d'accès (201) fonctionnellement couplé au dispositif de commande de configuration de système (203) et positionné près d'un emplacement auquel l'utilisateur du dispositif de communication sans fil (109) s'engage sur un dispositif de transport de support commun, où le noeud d'accès (201) comporte un transmetteur (213) pour communiquer sans fil les informations de configuration au dispositif de communication sans fil (109) et un récepteur (215) pour recevoir sans fil les informations se rapportant aux capacités de technologie d'accès radio du dispositif de communication sans fil (109).

24. Dispositif de communication sans fil (109) comprenant:
une mémoire (311) qui stocke des informations de technologie d'accès radio indiquant les technologies d'accès radio qui sont compatibles avec le dispositif de communication sans fil;
un transmetteur (305), fonctionnellement couplé à la mémoire (311), qui transmet des informations de technologie d'accès radio à un dispositif de commande de configuration de système (203) pour permettre au dispositif de commande de configuration de système de déterminer si le dispositif de communication sans fil est apte à fonctionner dans au moins un d'une pluralité de systèmes de communication sans fil fournissant un service de communication à une destination du dispositif de communication sans fil; et
un récepteur (307) qui reçoit des informations de configuration de système du dispositif de commande de configuration de système (203) pour un système de communication sans fil sélectionné de la pluralité de systèmes de communication sans fil avant que le dispositif de communication sans fil n'arrive à destination, où le système de communication sélectionné est choisi sur la base d'au moins les informations de technologie d'accès radio; et
un processeur (309) agencé pour utiliser les informations de configuration de système reçues pour reconfigurer le dispositif de communication sans fil pour qu'il fonctionne dans le système de communication sélectionné.

25. Dispositif de communication sans fil selon la revendication 24, dans lequel le récepteur (307) reçoit en outre des informations de sélection de système du dispositif de commande de configuration de système pour faciliter à l'utilisateur la sélection d'un de la pluralité de systèmes de communication sans fil, le dispositif de communication sans fil comprenant en outre:
un affichage (315) fonctionnellement couplé au récepteur (307) qui affiche l'information de sélection de système; et
une interface utilisateur (313) fonctionnellement couplée au transmetteur (305) qui permet à un utilisateur du dispositif de communication sans fil de sélectionner un de la pluralité de systèmes de communication sans fil pour produire le système de communication sans fil sélectionné.

26. Dispositif de communication sans fil selon la revendication 25, comprenant en outre un dispositif d'alerte (317) fonctionnellement couplé au récepteur (307) qui alerte l'utilisateur du dispositif de communication sans fil lors de la réception des informations de sélection du système.
